Europäisches Patentamt

European Patent Office

Office européen des brevets

(11) Numéro de publication: **0 404 632 B1**

# FASCICULE DE BREVET EUROPEEN

(45) Date de publication de fascicule du brevet: **15.03.95**   (51) Int. Cl.⁶: **C03C 14/00**, C03C 10/00

(21) Numéro de dépôt: **90401609.4**

(22) Date de dépôt: **12.06.90**

(54) **Matériau composite à matrice vitrocéramique renforcée et son procédé de préparation.**

(30) Priorité: **21.06.89 FR 8908260**

(43) Date de publication de la demande:
**27.12.90 Bulletin 90/52**

(45) Mention de la délivrance du brevet:
**15.03.95 Bulletin 95/11**

(84) Etats contractants désignés:
**AT BE CH DE DK ES FR GB GR IT LI LU NL SE**

(56) Documents cités:
**EP-A- 0 288 199**
**FR-A- 2 538 370**
**US-A- 4 794 094**

(73) Titulaire: **AEROSPATIALE Société Nationale Industrielle**
**37, Boulevard de Montmorency**
**F-75781 Paris Cédex 16 (FR)**

(72) Inventeur: **Drouet, Claudette**
**27, rue des Palombes**
**F-65290 Jullian (FR)**
Inventeur: **Goursat, Paul**
**Haut Félix**
**F-87430 Verneuil/Sur/Vienne (FR)**
Inventeur: **Langrone, Bernard**

**F-64460 Montsegur (FR)**
Inventeur: **Seraudie, Christophe**
**Jugealf Nazareth**
**F-19500 Meyssac (FR)**

(74) Mandataire: **Dubois-Chabert, Guy et al**
**c/o BREVATOME**
**25, rue de Ponthieu**
**F-75008 Paris (FR)**

Rank Xerox (UK) Business Services
(3. 10/3.0 9/3.3.3)

## Description

La présente invention concerne un matériau composite à matrice vitrocéramique renforcée, ainsi que son procédé de préparation.

Les matériaux composites à matrice vitrocéramique et à renforts notamment fibreux présentent aujourd'hui un grand intérêt technique compte tenu de leurs bonnes propriétés thermomécaniques et, pour cette raison, ils peuvent être avantageusement utilisés dans les domaines aéronautiques et spatiaux pour des applications nécessitant notamment une bonne tenue aux moyennes températures, c'est-à-dire de l'ordre de 600 à 1000°C.

Cependant, la plupart des matériaux de ce type développés à ce jour ne donnent pas entièrement satisfaction, tant au point de vue de leurs propriétés finales qu'au point de vue de leur mode d'élaboration.

Parmi les matériaux composites à matrice vitrocéramique les plus répandus et les plus performants, on connaît ceux pour lesquels la matrice est à base de lithium. Or les matrices de ce type ont une résistance à la corrosion qui n'est pas toujours suffisante.

Par ailleurs la technique la plus répandue pour fabriquer ces matériaux consiste à imprégner une préforme fibreuse (agent de renforcement) au moyen d'une barbotine contenant, sous des formes les plus diverses, tous les éléments nécessaires à l'obtention de la composition vitreuse désirée, puis on sèche la préforme ainsi imprégnée.

On répète éventuellement les étapes d'imprégnation-séchage jusqu'à l'obtention d'un préimprégné ayant la fraction volumique de fibres recherchée et/ou on empile puis solidarise entre eux par chauffage modéré des préimprégnés séchés dans le but d'obtenir des composites à renfort mono ou bi-directionnels de grandes tailles. Enfin on densifie cette préforme au moyen d'une étape de compression à chaud. Cette dernière étape, ayant en particulier pour but de faire fluer le verre à travers les torons de la préforme, nécessite que la viscosité du verre soit relativement faible (inférieure à $10^7$ poises) et donc que la température de pressage soit élevée.

Ainsi pour obtenir des résultats convenables en densité et en propriétés thermomécaniques, il est connu que les verres a base de lithium doivent être pressés au minimum aux environs de 1300-1400°C. res températures de pressage élevées font à l'évidence courir le risque d'endommager les libres qui constituent la structure de renforcement.

La présente invention permet d'obvier aux inconvénients énoncés ci-dessus.

L'objet principal de l'invention est de proposer des matériaux composites à matrice vitrocéramique renforcée et à température d'élaboration par pressage à chaud moins élevée que les températures indiquées plus haut.

Un autre objet de la présente invention est de fournir des matériaux composites à résistance à la corrosion améliorée.

Dans ce but, le matériau composite selon l'invention est du type comprenant une matrice vitrocéramique et un agent de renforcement de type fibreux et il est caractérisé en ce que la matrice vitrocéramique est à base de silice, d'alumine, d'oxydes d'alcalino-terreux et de terres rares dans les proportions pondérales suivantes rapportées à la masse totale de ladite matrice :

$5\% \leq MO \leq 40\%$

$25\% \leq SiO_2 \leq 70\%$

$15\% \leq Al_2O_3 \leq 70\%$

$5\% \leq$ Oxyde de terres rares $\leq 70\%$

formule dans laquelle M désigne un alcalino-terreux.

Des matériaux vitrocéramiques à base de silice, d'alumine, d'oxyde de magnésium et d'oxyde d'yttrium ont été décrits dans le document FR-A-2 538 370, mais dans ce cas le matériau était destiné au collage de pièces en céramique, alors que dans l'invention, on l'utilise comme matrice d'un matériau composite. De plus, il était mis en oeuvre à une température de 1400°C, c'est-à-dire à une température supérieure à celles que l'on préconise dans l'invention.

Par ailleurs, le procédé de fabrication du matériau selon l'invention est caractérisé en ce qu'il comporte les étapes suivantes :

a) on imprègne l'agent de renforcement au moyen d'une barbotine contenant les éléments consititutifs de la matrice vitrocéramique.

b) on sèche l'agent de renforcement ainsi imprégné ce par quoi on obtient un préimprégné.

c) on densifie le préimprégné obtenu.

d) on soumet le produit issu de l'étape c) à un traitement thermique.

Le matériau de l'invention est particulièrement intéressant compte tenu du fait qu'il présente une température d'élaboration inférieure à 1200°C.

Il présente aussi une bonne tenue à chaud de ses propriétés mécaniques.

D'autres caractéristiques et avantages de l'invention apparaîtront mieux à la lecture de la description et des exemples concrets mais non limitatifs qui vont suivre.

Comme on l'a vu plus haut la matrice vitrocéramique du matériau de l'invention est à base de silice (SiO$_2$), d'alumine (Al$_2$O$_3$), d'oxydes d'alcalino-terreux et de terres rares.

En ce qui concerne les oxydes d'alcalino-terreux, on utilise généralement les oxydes de calcium, de baryum, strontium et de magnésium, ce dernier étant préféré car il permet la recristallisation d'une phase à bas coefficient de dilatation de caractéristique dilatométrique proche de celle de l'agent de renforcement.

Pour les terres rares, on entend ici et pour le reste de la description les éléments de terres rares appelés lanthanides ayant des numéros atomiques de 57 à 71 inclus et l'yttrium.

Parmi ces éléments, on utilise plus particulièrement le cerium, le lanthane, le néodyme, le praséodyme et le samarium, les deux premiers cités étant préférés avec l'yttrium.

Les teneurs en oxyde de terre rare données ci-dessus et dans le reste de la description sont calculées pour l'oxyde le plus courant de la terre rare (Tr) concernée c'est-à-dire généralement Tr$_2$O$_3$ ou TrO$_2$ notamment pour le cerium.

On notera que tant pour les alcalino-terreux que pour les terres rares, on peut utiliser chacun de ces éléments seul ou en combinaison avec un autre élément du même groupe. Cette remarque s'applique pour l'ensemble de la description étant entendu que ce qui sera décrit en référence à un alcalino-terreux ou une terre rare s'appliquera aussi à une combinaison de plusieurs alcalino-terreux ou terres rares.

Les éléments constituant la matrice de l'invention sont présents dans les proportions indiquées plus haut c'est-à-dire :

$5\% \leq Mo \leq 40\%$

$25\% \leq SiO_2 \leq 70\%$

$15\% \leq Al_2O_3 \leq 70\%$

$5\% \leq$ Oxyde de terre rare $\leq 70\%$

Selon un mode de réalisation plus particulier les proportions respectives de ces éléments seront les suivantes :

$6,5\% \leq MO \leq 18\%$

$25\% \leq SiO_2 \leq 50\%$

$17,5\% \leq Al_2O_3 \leq 62,5\%$

$5\% \leq$ Oxyde de terre rare $\leq 50\%$

Selon un troisième mode encore plus particulier, les proportions peuvent être :

$7\% \leq MO \leq 11\%$

$28\% \leq SiO_2 \leq 40\%$

$20\% \leq Al_2O_3 \leq 45\%$

$10\% \leq$ Oxyde de terre rare $\leq 40\%$

Par ailleurs, le matériau de l'invention comprend un agent de renforcement de type fibreux.

Il s'agit généralement de renforts céramiques constitués par un assemblage, organisé ou aléatoire, de fibres longues et continues en céramique. Ainsi, les fibres utilisées peuvent se présenter dans la matrice selon une configuration unidirectionnelle, ou sous la forme de tissus, ou de mats non tissés, ou bien encore selon une configuration multidirectionnelle.

Eventuellement, l'agent de renforcement pourrait se présenter sous la forme de fibres courtes et/ou de whiskers, orientés de façon aléatoire dans la matrice.

On peut utiliser aussi comme agents de renforcement des fibres longues en combinaison avec des whiskers et/ou des fibres courtes dispersés dans la matrice.

D'un point de vue résistance mécanique, les matériaux composites préférés selon l'invention sont ceux soit à renfort fibreux unidirectionnel, c'est-à-dire constitué de fibres substantiellement toutes parallèles entre elles et orientées dans une seule et même direction (composite 1D), soit à renfort fibreux bidirectionnel, c'est-à-dire constitué de fibres substantiellement toutes parallèles entre elles mais de direction croisée dans deux plans horizontaux successifs, l'angle de croisure étant avantageusement choisi égal à 90° pour obtenir les meilleures propriétés mécaniques (composite 2D).

A titre de fibres céramiques pouvant convenir pour la constitution de l'agent de renforcement, on peut citer notamment celles en carbone, en bore, en alumine, en alumine-silice, en alumine-silice-bore, en carbure de silicium, en nitrure de silicium, en nitrure de bore et en carbonitrure de silicium. Bien entendu, des mélanges entre des fibres de nature céramique différente peuvent être utilisés à la réalisation du renfort.

Les fibres céramiques en carbure de silicium conviennent particulièrement bien pour la réalisation de composites à haute tenue thermomécanique.

3

EP 0 404 632 B1

La fraction volumique de l'agent de renforcement dans le matériau composite peut être comprise entre 20 % et 70 %, de préférence entre 30 et 50 %.

Le procédé de préparation du matériau composite selon l'invention va maintenant être décrit plus particulièrement.

Ce procédé comprend plusieurs étapes.

La première consiste à imprégner l'agent de renforcement (fibres unidirectionnelles, tissus, mats non tissés, préformés multidirectionnels, etc ...) au moyen d'une barbotine contenant les éléments constitutifs de la matrice vitrocéramique.

La barbotine d'imprégnation contient donc, sous une forme finement dispersée, les éléments silicium, aluminium, alcalino-terreux et terres rares dans des proportions pondérales respectives exprimées en oxydes dans les quantités définies ci-dessus, tous ces éléments présents dans la barbotine se retrouvant en effet, après pressage à chaud, dans la matrice céramique du composite.

Ces éléments sont présents sous la forme d'une masse fondue préalablement obtenue par mélange et fusion soit des oxydes des éléments considérés, soit de précurseurs de ces éléments sous formes de matières naturelles.

C'est ainsi que CaO peut être apporté par du silicate de calcium (Wollastonite), par du carbonate de calcium (Aragonite, Calcite), par du Feldspath calcique (Anorthite).

MgO peut être introduit par l'intermédiaire du silicate de magnésium (Steatite, Forsterite, Saphirine) par de l'aluminate de magnésium (Spinelle), par un hydrate de magnésium (Brucite) ou du carbonate de magnésium (Magnésite).

On peut aussi introduire ensemble CaO et MgO avec un carbonate double de calcium et de magnésium (Dolomite) ou un silicate double de ces éléments (Diopside).

$SiO_2$ et $Al_2O_3$ peuvent être apportés ensemble par du kaolin, de la cyanite, de la sillimanite, de l'argile, ou séparément par du quartz ou un hydrate d'alumine (hydrargillite, boehmite).

Enfin, on peut apporter conjointement $SiO_2$, $Al_2O_3$ et MgO par de la cordiérite.

La granulométrie des poudres constituant la charge céramique de la barbotine est avantageusement choisie inférieure à 50 $\mu$, encore plus préférentiellement inférieure à 10 $\mu$.

Les propriétés de rhéologie et de mouillabilité de la barbotine sont ajustées classiquement par addition de liants et de solvants de nature et de proportions appropriées. Les solvants sont éliminés lors de l'étape du séchage.

Dans une deuxième étape on sèche l'agent de renforcement imprégné issu de l'étape précédente.

Eventuellement, on peut répéter les étapes d'imprégnation et de séchage jusqu'à l'obtention d'un préimprégné ayant la fraction volumique recherchée d'agent de renforcement.

Selon une variante du procédé, convenant plus particulièrement pour la préparatipn de composites 1D ou 2D tels que définis ci-dessus, on peut également procéder à l'empilement puis au collage de préimprégnés identiques se présentant sous la forme de feuilles composites à renfort fibreux unidirectionnel, l'empilage se faisant soit en gardant parallèle (composite 1D) soit en croisant (composite 2D) les directions des fibres des feuilles superposées.

La troisième étape du procédé est celle de densification ou de frittage.

On notera toutefois qu'avant de procéder au frittage sous charge de la préforme imprégnée et séchée, il est préférable d'éliminer, partiellement ou totalement, les divers liants qui ont été utilisés à la préparation de la barbotine ; cette opération, dite de décrassage, est classiquement réalisée par traitement thermique modéré, sous air ou sous atmosphère neutre, de la préforme.

La densification ou frittage par chauffage se fait habituellement à une température d'au moins 850°C par exemple entre 850°C et 1200°C et plus particulièrement entre 900°C et 1100°C.

Selon un mode préférentiel, on procède sous pression.

La pression est généralement d'au moins 3 MPa et par exemple elle peut être comprise entre 3 ou 5 MPa et 25 MPa.

D'une manière connue en soi il est préférable de réaliser le traitement de densification ou frittage dans une atmosphère neutre.

La durée du traitement de densification est de préférence d'au moins 15 minutes et peut aller jusqu'à 3 heures par exemple.

La dernière étape du procédé est un traitement thermique ou de recristallisation. Cette étape permet de développer la structure cristalline dans la matrice amorphe obtenue à l'issue des étapes précédentes.

Ce traitement se fait à une température d'au moins 1000°C préférentiellement entre 1000 et 1200°C.

Il se fait généralement sans pression. Sa durée est de quelques heures, par exemple entre 0,5 et 6 heures.

Des exemples vont maintenant être donnés :

4

Exemple 1

Dans cet exemple on donne différentes compositions de départ à base de matières premières naturelles.

Les éléments constitutifs sont donnés en % pondéral.

Ces compositions une fois fondues peuvent être utilisées en barbotine et conduire aux matrices selon l'invention.

| Compositions / Eléments | 1 | 2 | 3 | 4 | 5 | 6 |
|---|---|---|---|---|---|---|
| Cordiérite | 70 | 60 | 50 | 60 | 60 | 50 |
| Alumine | 10 | 10 | – | – | 20 | – |
| $Y_2O_3$ | 20 | 30 | 20 | 40 | 20 | 5 |
| Stéatite | – | – | 30 | – | O | 45 |

Les teneurs des différents éléments de ces compositions sont données ci-dessous en oxydes:

| Compositions / Eléments | 1 | 2 | 3 | 4 | 5 | 6 |
|---|---|---|---|---|---|---|
| MgO | 9,7 | 8,3 | 17,6 | 8,3 | 8,3 | 22,9 |
| $SiO_2$ | 35,8 | 30,7 | 44,7 | 30,7 | 30,7 | 54,2 |
| $Al_2O_3$ | 34,5 | 31,0 | 17,7 | 21 | 41 | 17,8 |
| $Y_2O_3$ | 20,0 | 30,0 | 20,0 | 40,0 | 20,0 | 5,0 |

Exemple 2

Cet exemple décrit une fabrication d'un matériau selon l'invention. On synthétise le verre par fusion à l'air à 1550°C de la composition 1. La masse fondue ainsi obtenue est broyée jusqu'à l'obtention d'une poudre de grains de diamètre inférieur à 10 $\mu$m. On prépare une barbotine d'imprégnation à partir de cette poudre et de composition suivante :

| | |
|---|---|
| - Verre prébroyé (composition 1) | 10,3 kg |
| - Polystyrène | 0,87 kg |
| - Paraffine | 0,21 kg |
| - Dioctylphtalate | 0,36 kg |
| - Cyclohexane | 10,6 litres |

La barbotine est introduite dans un broyeur en alumine de 50 litres avec 50 kg de billes d'alumine. On broie pendant 15 heures.

On imprègne ensuite des fibres SiC par cette barbotine. On effectue un bobinage des plaques sur un mandrin polygonal. On découpe les nappes et on réalise un empilement à 0°.

On décrasse puis on fritte sous charge en atmosphère neutre à 900°C sous 5 MPa de pression, pendant 2 heures.

On réalise enfin un traitement de recristallisation à 1100°C durant 5 heures sans pression.

Les caractéristiques du matériau composite $P_1$ selon l'invention ainsi obtenus sont indiquées dans le tableau ci-dessous où figurent aussi celles d'un matériau $P_2$ de l'art antérieur de composition suivante :

| | | | |
|---|---|---|---|
| $SiO_2$ | 69,6% | $Li_2O$ | 3,0% |
| $Al_2O_3$ | 17,7% | $ZrO_2$ | 2,0% |
| $MgO$ | 2,7% | $Nb_2O_5$ | 3,0% |
| $BaO$ | 1,0% | $As_2O_3$ | 1,0% |

| | $P_1$ | $P_2$ |
|---|---|---|
| Température d'élaboration à chaud | 900°C | 1400°C |
| Densité | 2,61 | 2,5 |
| Fraction volumique de fibre | 40 | 50 |
| Flexion 3 Points à chaud MPa | 20°C 470 | 600 |
| | 1200°C 400 | 300 |

## Revendications

1. Matériau composite, du type comprenant une matrice vitrocéramique et un agent de renforcement de type fibreux caractérise en ce que la matrice vitrocéramique est à base de silice, d'alumine, d'oxyde de métal alcalino-terreux et d'oxyde de terre rare dans les proportions pondérales suivantes rapportées à la masse totale de ladite matrice :

   $5\% \leq MO \leq 40\%$

   $25\% \leq SiO_2 \leq 70\%$

   $15\% \leq Al_2O_3 \leq 70\%$

   $5\% \leq$ oxyde de terre rare $\leq 70\%$

   où M désigne un métal alcalino-terreux.

2. Matériau selon la revendication 1 caractérisé en ce que la matrice présente la composition suivante :

   $6,5\% \leq MO \leq 18\%$

   $25\% \leq SiO_2 \leq 50\%$

   $17,5\% \leq Al_2O_3 \leq 62,5\%$

   $5\% \leq$ oxyde de terre rare $\leq 50\%$

3. Matériau selon la revendication 1 ou 2, caractérisé en ce que la matrice présente la composition suivante :

   $7\% \leq MO \leq 11\%$

   $28\% \leq SiO_2 \leq 40\%$

   $20\% \leq Al_2O_3 \leq 45\%$

   $10\% \leq$ Oxyde de terre rare $\leq 40\%$

4. Matériau selon l'une des revendications précédentes caractérisé en ce que M est le magnésium.

5. Matériau selon l'une des revendications précédentes caractérisé en ce que la terre rare est l'yttrium, le cérium ou le lanthane.

6. Matériau selon l'une des revendications précédentes, caractérisé en ce que l'agent de renforcement fibreux comprend des fibres choisies parmi les libres longues, les tissus, les mats non tissés, les libres courtes et les whiskers.

7. Matériau selon la revendication 6, caractérisé en ce que l'agent de renforcement est à base de libres céramiques choisies dans le groupe comprenant les libres en carbone, en bore, en alumine, en alumine-silice, en alumine-silice-bore en carbure de silicium, en nitrure de silicium, en nitrure de bore et en carbonitrure de silicium.

8. Matériau selon l'une des revendications précédentes, caractérisé en ce que la fraction volumique de l'agent de renforcement dans ledit matériau est comprise entre 20 et 70 %, notamment entre 30 et 50 %.

9. Procédé de fabrication d'un matériau selon l'une des revendications précédentes caractérisé en ce qu'il comporte les étapes suivantes :
   a) on imprègne l'agent de renforcement au moyen d'une barbotine contenant les éléments constitutifs de la matrice vitrocéramique,
   b) on sèche l'agent de renforcement ainsi imprégné ce par quoi on obtient un préimprégné.
   c) on densifie le préimprégné obtenu
   d) on soumet le produit issu de l'étape c) à un traitement thermique.

10. Procédé selon la revendication 9, caractérisé en ce qu'on densifie le préimprégné par chauffage à une température d'au moins 850 °C et plus particulièrement comprise entre 850 et 1200 °C.

11. Procédé selon la revendication 9 ou 10, caractérisé en ce qu'on densifie le préimprégné par chauffage sous pression.

12. Procédé selon la revendication 9, caractérisé en ce qu'on soumet le produit issu de l'étape c) à un traitement thermique à une température d'au moins 1000 °C et de préférence entre 1000 °C et 1200 °C.

## Claims

1. Composite material of the type comprising a vitroceramic matrix and a reinforcing agent of the fibrous type, characterized in that the vitroceramic matrix is based on silica, alumina, alkaline-earth metal oxide and rare earth metal oxide in the following proportions by weight related to the total mass of the said matrix:
   $5\% \leq MO \leq 40\%$
   $25\% \leq SiO_2 \leq 70\%$
   $15\% \leq Al_2O_3 \leq 70\%$
   $5\% \leq$ rare earth oxide $\leq 70\%$
   where M denotes an alkaline-earth metal.

2. Material according to claim 1, characterized in that the matrix is of the following composition:
   $6.5\% \leq MO \leq 18\%$
   $25\% \leq SiO_2 \leq 50\%$
   $17.5\% \leq Al_2O_3 \leq 62.5\%$
   $5\% \leq$ rare earth oxide $\leq 50\%$.

3. Material according to claim 1 or 2, characterized in that the matrix is of the following composition:
   $7\% \leq MO \leq 11\%$
   $28\% \leq SiO_2 \leq 40\%$
   $20\% \leq Al_2O_3 \leq 45\%$

EP 0 404 632 B1

10% ≤ rare earth oxide ≤ 40%.

4. Material according to one of the preceding claims, characterized in that M is magnesium.

5. Material according to one of the preceding claims, characterized in that the rare earth is yttrium, cerium or lanthanum.

6. Material according to one of the preceding claims, characterized in that the fibrous reinforcing agent comprises fibres selected from among long fibres, fabrics, non-woven mats, short fibres and whiskers.

7. Material according to claim 6, characterized in that the reinforcing agent is based on ceramic fibres selected from the group comprising fibres of carbon, boron, alumina, alumina/silica, alumina/silica/boron, silicon carbide, silicon nitride, boron nitride and silicon carbonitride.

8. Material according to one of the preceding claims, characterized in that the reinforcing agent occupies between 20 and 70%, in particular between 30 and 50%, by volume of the said material.

9. Process for the production of a material according to one of the preceding claims, characterized in that the process comprises the following stages:
   a) the reinforcing agent is impregnated with a slip containing the constituents of the vitroceramic matrix,
   b) the reinforcing agent impregnated in this manner is dried, a prepreg thus being obtained
   c) the prepreg obtained is compacted
   d) the product arising from stage c) is subjected to thermal treatment.

10. Process according to claim 9, characterized in that the prepreg is compacted by heating to a temperature of at least 850°C and more particularly between 850 and 1200°C.

11. Process according to claim 9 or 10, characterized in that the prepreg is compacted by heating under pressure.

12. Process according to claim 9, characterized in that the product arising from stage c) is subjected to thermal treatment at a temperature of at least 1000°C and preferably between 1000°C and 1200°C.

**Patentansprüche**

1. Verbundwerkstoff des Typs, welcher eine Glaskeramikmatrix und ein Verstärkungsmittel des Fasertyps umfaßt, **dadurch gekennzeichnet, daß** die Glaskeramikmatrix auf der Basis von Silizium, Aluminium, Erdalkalimetalloxid und Oxid einer seltenen Erde in den folgenden Gewichtsprozenten mit Bezug auf die Gesamtmasse der Matrix umfaßt:
   $5\% \leq MO \leq 40\%$
   $25\% \leq SiO_2 \leq 70\%$
   $15\% \leq Al_2O_3 \leq 70\%$
   $5\% \leq$ Oxid der seltenen Erde $\leq 70\%$
   wobei M ein Erdalkalimetall bezeichnet.

2. Verbundwerkstoff nach Anspruch 1, **dadurch gekennzeichnet, daß** die Matrix die folgende Zusammensetzung aufweist:
   $6,5\% \leq MO \leq 18\%$
   $25\% \leq SiO_2 \leq 50\%$
   $17,5\% \leq Al_2O_3 \leq 62,5\%$
   $5\% \leq$ Oxid der seltenen Erde $\leq 50\%$

3. Verbundwerkstoff nach einem der Ansprüche 1 oder 2, **dadurch gekennzeichnet, daß** die Matrix die folgende Zusammensetzung aufweist:
   $7\% \leq MO \leq 11\%$
   $28\% \leq SiO_2 \leq 40\%$
   $20\% \leq Al_2O_3 \leq 45\%$

8

10% ≦ Oxid der seltenen Erde ≦ 40%

4. Verbundwerkstoff nach einem der vorangegangenen Ansprüche, **dadurch gekennzeichnet, daß** M Magnesium ist.

5. Verbundwerkstoff nach einem der vorangegangenen Ansprüche, **dadurch gekennzeichnet, daß** die seltene Erde gleich Yttrium, Cerium oder Lanthan ist.

6. Verbundwerkstoff nach einem der vorangegangenen Ansprüche, **dadurch gekennzeichnet, daß** das faserartige Verstärkungsmittel Fasern umfaßt, die gewählt werden unter den langen Fasern, den Geweben, den nicht gewebten Matten, den kurzen Fasern und den Whiskers.

7. Verbundwerkstoff nach Anspruch 6, **dadurch gekennzeichnet, daß** das Verstärkungsmittel auf der Basis von Keramikfasern ist, die unter den Gruppen gewählt werden, umfassend die Faser aus Kohlenstoff, Bor, Aluminium, Aluminiumoxid-Siliziumdioxid, Aluminiumoxid-Siliziumdioxid-Bor, Siliziumkarbid, Siliziumnitride, Bornitride, Siliziumcarbonnitrid.

8. Verbundwerkstoff nach einem der vorangegangenen Ansprüche, **dadurch gekennzeichnet, daß** der Volumenanteil des verstärkungsmittels in dem genannten Material zwischen 20 und 70% liegt, insbesondere zwischen 30 und 50 %.

9. Verfahren zur Herstellung eines Werkstoffes gemäß einem der vorangegangenen Ansprüche, **dadurch gekennzeichnet, daß** es die folgenden Schritte umfaßt:
   a) Imprägnieren des verstärkungsmittels mit Hilfe eines Schlickers, welcher die Komponenten der Glaskeramikmatrix enthält,
   b) Trocknen des so imprägnierten Verstärkungsmittels, wodurch man eine vorimprägnierung erhält,
   c) verdichten der erhaltenen vorimprägnierung,
   d) Unterziehen des Ausgangsproduktes von Schritt c) einer Wärmebehandlung.

10. Verfahren nach Anspruch 9, **dadurch gekennzeichnet, daß** die Verdichtung der Vorimprägnierung durch Aufheizung auf eine Temperatur von mindestens 850°C und insbesondere zwischen 850 und 1200°C erfolgt.

11. Verfahren nach Anspruch 9 oder 10, **dadurch gekennzeichnet, daß** die Verdichtung der Vorimprägnierung durch Aufheizung unter Druck geschieht.

12. Verfahren nach Anspruch 9, **dadurch gekennzeichnet, daß** das Ausgangsprodukt von Schritt c) einer Wärmebehandlung bei einer Temperatur von mindestens 1000°C und vorzugsweise zwischen 1000°C und 1200°C unterzogen wird.